Europäisches Patentamt

European Patent Office

Office européen des brevets

(19)

(11) **EP 1 066 910 A1**

(12) # DEMANDE DE BREVET EUROPEEN

(43) Date de publication:
**10.01.2001 Bulletin 2001/02**

(51) Int Cl.⁷: **B23K 9/10**

(21) Numéro de dépôt: **00401802.4**

(22) Date de dépôt: **23.06.2000**

| | |
|---|---|
| (84) Etats contractants désignés:<br>**AT BE CH CY DE DK ES FI FR GB GR IE IT LI LU MC NL PT SE**<br>Etats d'extension désignés:<br>**AL LT LV MK RO SI** | (72) Inventeurs:<br>• **Eyschen, Jean-Pierre**<br>  **65530 La Frette sur Seine (FR)**<br>• **Reymond, Christian**<br>  **95360 Montmagny (FR)** |
| (30) Priorité: **05.07.1999 FR 9908619** | (74) Mandataire: **Le Moenner, Gabriel et al**<br>**Societé l'Air Liquide**<br>**Service Brevets et Marques**<br>**75, Quai d'Orsay**<br>**75321 Paris Cédex 07 (FR)** |
| (71) Demandeurs:<br>• **LA SOUDURE AUTOGENE FRANCAISE**<br>  **95310 Saint Ouen L'Aumone (FR)**<br>• **L'AIR LIQUIDE, SOCIETE ANONYME POUR L'ETUDE ET L'EXPLOITATION DES PROCEDES GEORGES CLAUDE**<br>  **75321 Paris Cédex 07 (FR)** | |

(54) **Poste de soudage à l'arc avec alternance de périodes d'arc et de périodes de court circuit.**

(57)     Le poste de soudage à l'arc avec alternance de périodes d'arc et de périodes de court-circuit comporte un générateur de courant de soudage (10) adapté pour établir un courant de soudage entre une électrode de soudage (12) et une masse (14) destinée à être reliée à la pièce à souder, lequel poste de soudage comporte :

-   des moyens (20) de détection du phénomène de striction en fin de court-circuit entre l'électrode de soudage (12) et la masse (14) ; et
-   des moyens (22) de réduction du courant de soudage lors de l'existence du phénomène de "pinch effect".

Les moyens (22) de réduction du courant de soudage comportent des moyens (24) d'établissement, en série avec l'arc de soudage, d'une forte tension en opposition avec le sens du courant de soudage imposée par un circuit d'excitation (27).

FIG.1

EP 1 066 910 A1

**Description**

La présente invention concerne un poste de soudage à l'arc pouvant fonctionner avec alternance de périodes d'arc et de périodes de court-circuit, du type comportant un générateur de courant de soudage adapté pour établir un courant de soudage entre une électrode de soudage et une masse destinée à être reliée à la pièce à souder, lequel poste de soudage comporte :

- des moyens de détection du phénomène de striction en fin de court-circuit entre l'électrode de soudage et la masse ; et
- des moyens de réduction du courant de soudage lors de l'existence du phénomène de striction.

Lors d'une phase de soudage à l'arc avec apport de métal, des périodes d'arc et des périodes de court-circuit se succèdent.

En période d'arc, l'extrémité du métal d'apport fond et une goutte de métal se forme progressivement. L'énergie nécessaire est apportée par effet Joule et par l'arc électrique. Comme le fil constituant le métal d'apport est dévidé de manière continue à une vitesse supérieure à la vitesse de fusion, la goutte de métal entre en contact avec le bain, initiant une période de court-circuit.

En période de court-circuit, de l'énergie supplémentaire est apportée à la goutte par effet Joule afin que cette dernière soit transférée au bain depuis l'extrémité du fil.

Pour que l'énergie apportée par effet Joule soit adaptée, le courant augmente en période de court-circuit.

Or, juste avant la fin de la période de court-circuit, un phénomène de striction se développe entre la goutte et l'extrémité du fil. Ce phénomène est couramment désigné en anglais par «pinch effect».

Il est connu que ce phénomène, dans certaines conditions, une fois engagé, se poursuit sans qu'il soit nécessaire de maintenir le courant à une valeur élevée. En effet, les forces qui interviennent pendant le phénomène de «pinch effect» sont proportionnelles au carré du courant.

Si, lors du rétablissement de l'arc, le courant est maintenu à une valeur élevée, le régime est projetant et l'aspect du cordon de soudure en est altéré.

Lors de la dernière phase de court-circuit, correspondant au phénomène du «pinch effect», une croissance rapide et progressive de la tension est observée jusqu'au rétablissement de l'arc.

Afin d'éviter les projections lors de la phase de «pinch effect», il est connu de faire décroître le courant très rapidement, c'est-à-dire dans un laps de temps compris entre 100 et 200 μs. Cette décroissance est obtenue notamment par l'introduction momentanée dans le circuit de soudage d'une résistance de valeur élevée.

Cette résistance est rendue active dans le circuit de soudage par l'intermédiaire d'un organe à semi-conducteur, qui est soumis à des échauffements importants du fait des fortes intensités auxquelles il est soumis. En effet, en dehors des périodes où la résistance est introduite dans le circuit de soudage, l'organe à semi-conducteur est traversé par l'intensité élevée nécessaire au soudage. De ce fait, lors de fonctionnement à forte intensité, les échauffements deviennent prohibitifs.

Différents documents décrivent des mises en oeuvre de cette solution.

Le document EP-B-0.273.540 prévoit par exemple une résistance montée en parallèle avec un organe de commutation à transistor de puissance de type Darlington. Ce circuit parallèle est monté en série avec la source de puissance et l'électrode de soudage. L'organe de commutation assure, lorsqu'il est à l'état bloqué, la mise en série de la résistance dans le circuit de soudage, ce qui provoque une réduction du courant de soudage. Au contraire, lorsque l'organe de commutation est conducteur, la résistance est court-circuitée, permettant le passage d'un courant de soudage de forte intensité.

Le document FR-A-2.666.261 décrit également un circuit de soudage incorporant une résistance parallèle ou amortisseur montée aux bornes d'un commutateur. Ce dernier est commandé par un circuit annonciateur pour réduire le courant de soudage lors de l'existence d'un court-circuit.

Dans le document EP-B-0.369.367 également, il est prévu un amortisseur monté en parallèle avec un commutateur commandé pour provoquer une forte baisse du courant par l'intermédiaire de l'amortisseur.

De manière sensiblement analogue, le document EP-B-0.441.337 décrit un dispositif de réduction des projections comportant un circuit d'amortissement monté en parallèle aux bornes d'un organe de commutation. Le circuit d'amortissement assure une réduction du courant de soudage lorsque l'organe de commutation est bloqué.

Par ailleurs, US-A-4.546.234 décrit un procédé de commande d'une source de puissance destinée au soudage, comportant plusieurs phases successives. Ce document ne décrit toutefois que sommairement la structure des moyens mis en oeuvre dans la source de puissance pour assurer la commande de l'intensité de soudage, et notamment sa réduction rapide.

EP-A-0.324.960 décrit un dispositif de soudage comportant une unique source de courant. Trois sous-circuits de traitement du courant sont montés en parallèle entre la sortie de la source de courant et les bornes de sortie du dispositif de soudage. Un premier sous-circuit incluant une forte réactance fournit en continu un courant de base relativement faible. Les deux autres sous-circuits sont adaptés pour fournir un flux de courant supplémentaire respectivement au début de la phase d'arc électrique et durant la phase de court-circuit.

Chacun des deux derniers sous-circuits est muni à sa sortie d'une résistance et d'un condensateur montés tous deux en parallèle avec un transistor de type Darlington commandé pour assurer la connexion de la résistance en série dans le sous-circuit pour faire chuter rapidement l'intensité.

Enfin, «Control of short circuiting in MIG-welding», P. BOUGHTON, C Eng, MIMechE, AMIEE, AWeldl and G.J. Mac GREGOR, volume 4, 1974, number 2, décrit un circuit de soudage comportant un circuit principal délivrant en continu un courant de base constant auquel est associé en parallèle un ensemble de circuits adaptés pour fournir des impulsions de courant élevé lors de chaque phase de court-circuit.

Ainsi, dans l'état de la technique, les postes de soudage connus ont, afin de réduire rapidement l'intensité de soudage lors des phases de court-circuit, par exemple un organe résistif monté en parallèle avec un transistor de commande, lequel est traversé par le courant de soudage lors des phases d'arc électrique, ce qui crée un échauffement important lors du fonctionnement à une intensité élevée.

L'invention a pour but de fournir un poste de soudage à l'arc permettant une décroissance rapide du courant de soudage pendant le phénomène de «pinch effect», mais ne présentant pas l'inconvénient mentionné ci-dessus.

A cet effet, l'invention a pour objet un poste de soudage à l'arc pouvant fonctionner avec alternance de périodes d'arc et de périodes de court-circuit, du type précité, caractérisé en ce que les moyens de réduction du courant de soudage comportent des moyens d'établissement, en série avec l'arc de soudage, d'une tension en opposition avec le sens du courant de soudage, les moyens comportant un circuit d'excitation imposant ladite tension.

Suivant des modes particuliers de réalisation, le poste de soudage comporte l'une ou plusieurs des caractéristiques suivantes :

- les moyens d'établissement d'une tension en opposition avec le courant de soudage comportent des moyens inductifs adaptés pour créer en série avec l'arc de soudage une force contre-électromotrice induite ;
- lesdits moyens inductifs comportent un transformateur, dont un enroulement de puissance est connecté en série avec l'arc de soudage, et dont un enroulement de commande est intégré dans le circuit d'excitation piloté par les moyens de détection du phénomène de «pinch effect» ;
- le circuit d'excitation est adapté pour magnétiser l'enroulement de commande, pendant au moins une partie des périodes de fonctionnement en court-circuit du poste de soudage, afin de créer dans l'enroulement de puissance, ladite force contre-électromotrice induite ;

- le circuit d'excitation comporte une source de tension et des moyens de commutation adaptés, pour assurer la magnétisation de l'enroulement de commande sous une première tension, lors de la détection du phénomène de striction afin de créer ladite force contre-électromotrice induite dans l'enroulement de puissance ;
- le circuit d'excitation comporte une seconde source de tension monté en série avec une diode, pour limiter la tension développée aux bornes de l'enroulement de commande ;
- ledit transformateur comporte en outre un enroulement auxiliaire couplé magnétiquement avec l'enroulement de puissance, et l'enroulement de commande, lequel enroulement auxiliaire est monté en série avec une diode dans le circuit d'excitation pour limiter la tension aux bornes de l'enroulement de commande ;
- le circuit d'excitation comporte, aux bornes de l'enroulement de commande, deux branches opposées montées en parallèle comportant chacune un organe de commutation à semi-conducteur et une diode montés en série, ainsi qu'un générateur de tension relié entre les transistors et diodes des deux branches ;
- le circuit d'excitation comporte des moyens de mise en roue libre de l'enroulement de commande avant l'achèvement de la période de fonctionnement en court-circuit du poste de soudage ;
- les moyens de détection du phénomène de striction en fin de court-circuit comportent un circuit dérivateur adapté pour estimer la dérivée de la tension établie entre l'électrode de soudage et la masse en fonction de paramètres de dérivation, et les moyens comportent des moyens de modification des paramètres de dérivation au cours de la période de court-circuit ;
- les moyens de modification des paramètres de dérivation sont adaptés pour modifier les paramètres de dérivation depuis l'instant initial de détection du court-circuit et maintenir les paramètres modifiés pendant une durée comprise entre 100 μs et 2 ms et notamment sensiblement égale à 1 ms ; et
- les moyens de détection du phénomène de striction comportent, pour la mesure de la tension d'arc, un premier fil de sonde indépendant relié directement à l'électrode, en aval du faisceau alimentant l'électrode depuis le générateur et un second fil de sonde relié directement à la pièce à souder.

L'invention concerne aussi l'utilisation d'un poste de soudage selon l'invention pour la mise en oeuvre d'un procédé de soudage MIG (Metal Inert Gas) ou MAG (Metal Active Gas).

L'invention sera mieux comprise à la lecture de la description qui va suivre, donnée uniquement à titre d'exemple, et faite en se référant aux dessins sur lesquels :

- La figure 1 est une vue schématique d'un poste de soudage selon l'invention dont le générateur a une valeur d'inductance faible ;
- Les figures 2 et 3 sont des vues schématiques de variantes de réalisation du poste de la figure 1, et
- La figure 4 est une vue schématique de moyens de détection du phénomène de «pinch effect» pouvant être mis en oeuvre dans le poste de soudage des figures 1 à 3.

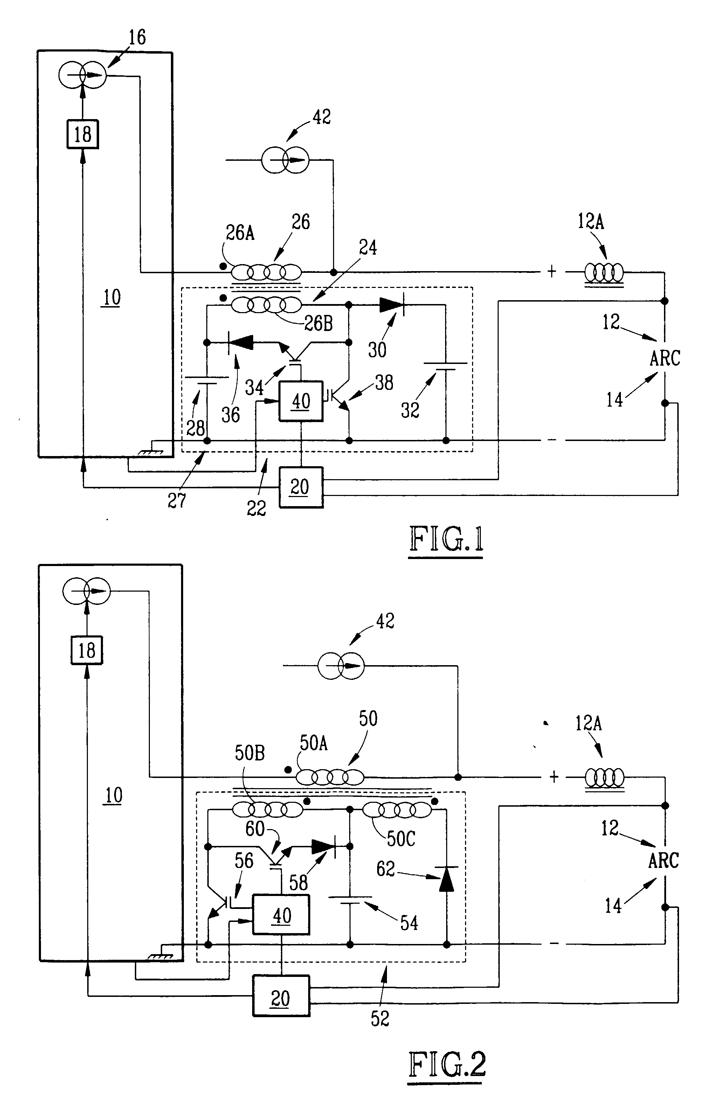

Le poste de soudage représenté sur la figure 1 comporte un générateur de soudage à transistors 10 adapté pour établir un courant de soudage entre une électrode de soudage 12 et une masse 14 reliée à la pièce à souder.

Le générateur de soudage 10 comporte un convertisseur 16 commandé en courant ou en tension par des moyens de commande 18. Les moyens de commande 18 permettent de commander le convertisseur pour alimenter ou non l'électrode de soudage 12 en fonction d'un signal de commande externe. La fréquence imposée au générateur par les moyens de commande 18 est par exemple de 50 kHz.

Des moyens de réduction des projections lors du soudage sont installés en sortie du générateur 10, en amont de l'arc établi entre une électrode 12 et la masse 14.

Selon l'invention, le poste de soudage comporte des moyens 20 de détection du phénomène de striction ou phénomène de «pinch effect» rencontré en fin de court-circuit entre l'électrode de soudage 12 et la masse 14, ainsi que des moyens 22 de réduction du courant de soudage lors de l'apparition d'un tel phénomène de «pinch effect».

Dans l'exemple considéré, les moyens 20 de détection du phénomène de «pinch effect» sont adaptés pour mesurer la tension d'arc. Cette tension est mesurée soit en sortie du générateur 10, soit avantageusement au plus près de l'arc. Cette mesure est effectuée notamment par un fil de sonde indépendant disposé dans le faisceau alimentant l'électrode. Ce fil est relié directement à l'électrode 14. De même, un autre fil est relié directement à la pièce à souder pour mesurer son potentiel.

Les moyens 20 assurent un filtrage de la tension mesurée et une dérivation du signal de tension par rapport au temps. Le signal ainsi dérivé est comparé à un seuil prédéterminé et le franchissement de ce seuil provoque l'émission d'un signal de détection du phénomène de «pinch effect» lorsque le phénomène se produit.

Un exemple de réalisation avantageux des moyens 20 sera décrit en détail à la fin de la description.

Les moyens 20 sont reliés aux moyens de commande 18 du générateur afin de piloter ceux-ci. En particulier, les moyens 20 pilotent les moyens de commande 18 pour faire cesser l'alimentation de l'électrode 12 lors de la détection du début de la période de «pinch effect». L'alimentation issue du générateur 10 n'est rétablie qu'après l'achèvement du court-circuit et l'établissement d'un nouvel arc entre l'électrode 12 et la pièce à souder.

Selon l'invention, les moyens 22 de réduction du courant de soudage comportent des moyens 24 d'établissement, en série avec l'arc de soudage, d'une forte tension déterminée en opposition avec le sens du courant.

Ces moyens 24 comportent un transformateur 26 qui fonctionne en inductance hors des périodes de «pinch effect», et qui fonctionne en transformateur lors des périodes de «pinch effect».

L'un, 26A, des enroulements du transformateur, constituant un enroulement de puissance, remplace l'inductance propre d'un poste de soudage classique. Il comporte, dans l'exemple considéré, vingt-cinq spires. Ainsi, l'électrode 12 est reliée en sortie du générateur 10 par l'intermédiaire de l'enroulement de puissance 26A. Sur le schéma de la figure 1 est représentée en outre une bobine 12A correspondant à l'inductance du faisceau de câbles alimentant l'arc.

Le second enroulement 26B, assurant la commande de l'enroulement de puissance 26A, est intégré dans un circuit d'excitation 27. Dans l'exemple considéré, l'enroulement de commande 26B comporte cinquante spires.

Le circuit d'excitation 27 est adapté pour imposer temporairement, par l'intermédiaire de l'enroulement de commande 26B, une forte tension dans l'enroulement de puissance 26A, cette tension étant en opposition avec le sens du courant.

Dans le circuit d'excitation 27, une première extrémité de l'enroulement de commande 26B est liée à la masse par une première source de tension 28. La tension $E_1$ fournie par la première source 28 est fixée à 150 volts.

L'autre extrémité de l'enroulement de commande 26B est reliée à la masse par l'intermédiaire d'une diode 30 et d'une seconde source de tension 32. La tension $E_2$ fournie par la seconde source est fixée à 300 volts.

Un transistor 34 et une diode 36 sont connectés en série sur une branche montée en parallèle avec l'enroulement de commande 26B.

Un transistor 38 est monté en parallèle avec la source de tension 32 et la diode 30. Il relie la sortie correspondante de l'enroulement de commande 26B à la masse.

Les transistors sont avantageusement de type IGBT ou MOS.

Les commandes des transistors 34 et 38 sont reliées à un circuit de pilotage 40 adapté pour commander l'état de conduction des deux transistors. Ce circuit de pilotage 40 est connecté aux moyens 20 de détection du phénomène de «pinch effect», afin que la commande de la conduction des transistors 34 et 38 soit assurée en fonction de l'existence du phénomène de «pinch effect» entre l'électrode de soudage 12 et la masse 14.

En outre, pour son fonctionnement propre, le circuit de pilotage 40 est connecté directement au générateur 10 pour obtenir une information représentative de l'intensité débitée par celui-ci entre l'électrode 12 et la pièce à souder.

Eventuellement, une source de courant auxiliaire 42 est prévue pour débiter un courant de réamorçage, en aval de l'enroulement de puissance 26A, directement vers l'électrode de soudage 12. Cette source auxiliaire 42 est adaptée pour un réamorçage de l'arc électrique après achèvement d'une période de court-circuit avant que le générateur 10 ne réalimente le circuit de soudage. La source auxiliaire 42 fournit un courant constant, par exemple de 20 A.

Le poste de soudage, représenté sur la figure 1, fonctionne de la manière suivante.

Initialement pendant une période d'arc, les transistors 34 et 38 sont bloqués et les moyens de commande 18 pilotent le convertisseur 16, de sorte que le générateur de soudage 10 alimente normalement l'arc.

Lors de la détection par les moyens 20, du début de la période de «pinch effect», les moyens de commande 18 pilotent le convertisseur 16, de sorte que le générateur de soudage 10 cesse d'alimenter l'arc. Le transistor 34 est maintenu bloqué et le transistor 38 est mis en conduction. Dans cette phase de fonctionnement, la diode 36 assure la protection du transistor 34. Une tension $E_1$, établie par la source 28, est alors appliquée sur l'enroulement de commande 26B du transformateur. L'enroulement de puissance 26A développe alors une tension $E'_1$ égale au produit de la tension $E_1$ par le rapport de transformation défini par le rapport du nombre de spires des deux enroulements.

Ainsi, le circuit de soudage est équivalent à un circuit RL soumis à une force contre-électromotrice qui tend à faire décroître le courant établi entre l'électrode de soudage 12 et la masse 14. L'équation du courant en fonction du temps s'exprime sous la forme :

$$I(t) = (I_{max} + \frac{E_1'}{R})e^{-t/\tau} - \frac{E_1'}{R}$$

avec $\tau = \frac{L}{R}$
et $E_1' = E_1 \times \frac{n_1}{n_2}$
où R et L sont respectivement la résistance et l'inductance du circuit de soudage, c'est-à-dire de la bobine 12A, et
où $n_1$ et $n_2$ sont les nombres de spires respectifs des enroulements 26A et 26B. Le rapport de transformation est ici égal à 0,5, avec $n_1$ = 25 spires et $n_2$ = 50 spires.

Lorsque le courant de soudage devient faible, c'est-à-dire inférieur à 20 ou 50 A, le circuit de pilotage 40 provoque le blocage du transistor 38, et la mise en conduction du transistor 34. L'enroulement de commande 26B est alors mis en roue libre et son courant, aux pertes près, ne varie pas.

Après le rétablissement de l'arc, le transistor 34 est bloqué alors que le transistor 38 est maintenu également bloqué. L'enroulement de commande 26B se démagnétise alors.

Le générateur de soudage 10 est enfin remis en marche par l'intermédiaire des moyens de commande 18 afin de fournir le courant de soudage en période d'arc.

La présence de la source de tension 32 et de la diode 30 limite la tension maximale pouvant s'établir aux bornes de l'enroulement de commande 26B. Ainsi, les transistors 34 et 38 et la diode 36 sont protégés contre d'éventuelles surtensions pouvant prendre naissance entre leurs bornes.

La mise en roue libre de l'enroulement de commande 26B évite sa démagnétisation, car le courant circulant dans l'enroulement de commande 26B engendrerait un courant dans l'enroulement de puissance 26A, qui tendrait à augmenter rapidement le courant de soudage.

Avec un tel circuit, aucun organe à semi-conducteur des moyens 22 de réduction du courant n'est traversé par une forte intensité lors des phases d'arc électrique.

Sur la figure 2 est représenté un autre mode de réalisation d'un poste de soudage selon l'invention dans lequel la démagnétisation de l'enroulement de commande est assurée par un enroulement supplémentaire prévu dans le transformateur.

Sur la figure 2, les organes identiques ou analogues à ceux du circuit de la figure 1 sont désignés par les mêmes numéros de référence.

Dans ce mode de réalisation, le transformateur mis en oeuvre, désigné par la référence 50, comporte un enroulement de puissance 50A disposé entre la sortie du convertisseur 16 et l'électrode de soudage 12.

Il comporte en outre un enroulement de commande 50B et un enroulement de démagnétisation 50C. Ces deux enroulements 50B et 50C reliés en série sont intégrés dans un circuit d'excitation 52 adapté pour établir temporairement, dans l'enroulement 50A, une forte tension en opposition avec le sens du courant de soudage lors du phénomène de «pinch effect».

Le circuit 52 comporte une unique source de tension 54 connectée entre la masse et le point milieu des enroulements 50B et 50C. Cette source fournit une tension $E_3$ égale à 150 V. L'autre borne de l'enroulement de commande 50B est reliée à la masse par l'intermédiaire d'un transistor 56. Une diode 58, connectée en série à un transistor 60, est montée en parallèle avec l'enroulement de commande 50B.

Les transistors 56 et 60 sont connectés au circuit de pilotage 40, lui-même relié aux moyens 20 de détection du phénomène de «pinch effect».

Enfin, alors que l'une des bornes de l'enroulement de démagnétisation 50C est reliée à la source de tension 54, l'autre borne est reliée à la masse par l'intermédiaire d'une diode 62.

Dans cette variante de réalisation, les éléments 54, 56, 58 et 60 sont les homologues, respectivement, des éléments 28, 38, 36 et 34 du circuit de la figure 1. Ils assurent la magnétisation de l'enroulement de commande 50B. De même, l'enroulement 50C est fonctionnellement l'homologue de la source de tension 32 et assure à la fois la démagnétisation de l'enroulement de commande 50B et la protection des transistors 56 et 60.

Le poste de soudage représenté sur la figure 2 fonctionne de la manière suivante.

Initialement, pendant une période d'arc, les transistors 56 et 60 sont bloqués et les moyens de commande 18 pilotent le convertisseur 16 pour assurer la circulation du courant de soudage issu du générateur 10 au travers de l'enroulement de puissance 50A.

Lors de la détection du phénomène de «pinch effect» par les moyens 20, les moyens de commande 18 interrompent le fonctionnement du convertisseur 16. De même, le transistor 56 est mis en conduction alors que le transistor 60 est maintenu bloqué. Ainsi, une tension $E_3$, fournie par la source 54 est établie aux bornes de l'enroulement de commande 50B. Il prend ainsi naissance une tension $E'_3$ aux bornes de l'enroulement de puissance 50A, cette tension étant opposée au sens de circulation du courant de soudage.

Ainsi, comme précédemment, le courant de soudage décroît rapidement.

Après que le circuit 40 a détecté que le courant de soudage a atteint une faible valeur, le transistor 56 est bloqué alors que le transistor 60 est mis en conduction. L'enroulement de commande 50B est alors mis en roue libre au travers de la branche constituée de la diode 58 et du transistor 60.

Après rétablissement de l'arc électrique, le transistor 60 est bloqué de sorte que l'enroulement de commande 50B se démagnétise progressivement notamment au travers de l'enroulement de démagnétisation 50C.

Comme dans le mode de réalisation précédent, la diode 62 et l'enroulement auxiliaire 50C, aux bornes duquel s'établit une différence de potentiel, assurent une limitation de la tension maximale pouvant s'établir aux bornes de l'enroulement de commande 50B. Les transistors 56 et 60 se trouvent ainsi protégés, ainsi que la diode 58.

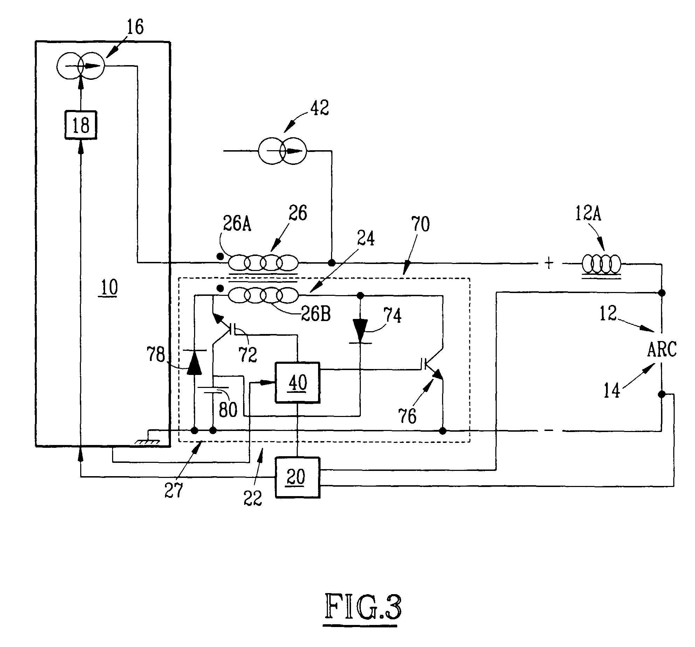

Sur la figure 3 est représenté encore un autre mode de réalisation d'un poste de soudage selon l'invention. Celui-ci diffère de celui de la figure 1 uniquement par la structure du circuit d'excitation de l'enroulement de puissance.

Sur cette figure, les organes identiques ou analogues à ceux du circuit de la figure 1 sont désignés par les mêmes numéros de référence.

On reconnaît dans ce mode de réalisation le transformateur 26 qui fonctionne en inductance hors des périodes de "pinch effect", et qui fonctionne en transformateur lors des périodes de "pinch effect".

L'enroulement de commande 26B du transformateur est intégré dans un circuit d'excitation noté 70.

Une première boucle formée d'un transistor 72 et d'une diode 74 montés en série est reliée en parallèle à l'enroulement de commande 26B. Une seconde boucle formée d'un transistor 76 et d'une diode 78 montés en série est reliée en parallèle à l'enroulement de commande 26B. Les éléments constituant les deux boucles sont intervertis et ont leurs bornes inversées. Une source de tension 80 est connectée au point milieu des deux boucles, c'est-à-dire entre, d'une part, le transistor 72 et la diode 74 et, d'autre part, entre le transistor 76 et la diode 78.

L'enroulement de commande 26B est ainsi disposé dans un pont constitué de deux diodes et deux transistors, le pont étant alimenté par la source de tension 80.

Les transistors 72 et 76 sont pilotés par le circuit 40.

Le poste de soudage de la figure 3 fonctionne de la manière suivante.

Pendant une période d'arc, alors que le générateur 10 alimente normalement l'arc, les transistors 72 et 76 sont bloqués.

Lors de la détection du début de la période de "pinch effect", les moyens de commande 18 assurent l'arrêt du générateur 10 qui cesse d'alimenter l'arc.

Les deux transistors 72 et 76 sont mis en conduction. La tension établie par la source 80 est alors appliquée directement sur l'enroulement de commande 26B. Ainsi, le courant de soudage diminue rapidement, le circuit de soudage étant équivalent à un circuit RL soumis à une force contre-électromotrice, comme cela a été expliqué précédemment.

Lorsque le courant de soudage devient faible, le circuit de pilotage 40 provoque le blocage de l'un des transistors 72 et 76, l'autre étant maintenu en conduction. L'enroulement de commande est alors mis en roue libre au travers de la boucle comportant le transistor maintenu en conduction et la diode correspondante. Le courant de l'enroulement de commande 26B est alors sensiblement constant, la source de tension 80 étant alors non connectée à l'enroulement.

Après le rétablissement de l'arc, le transistor 72 ou 76 encore en conduction est bloqué, ce qui provoque la démagnétisation de l'enroulement de commande 26B au travers des diodes 74 et 78, de la source 80 et du circuit de soudage.

Le circuit d'excitation 70 est de structure relativement simple puisqu'il ne nécessite qu'un unique enroulement et qu'une unique source de tension.

De plus, la consommation énergétique du circuit est faible puisque la source de tension fournit de l'énergie pendant une phase de fonctionnement du circuit et la récupère partiellement pendant l'autre phase de fonctionnement du circuit.

Ainsi, il n'est pas nécessaire de prévoir un circuit de décharge spécifique. De plus, le circuit de charge peut être d'un dimensionnement restreint puisque peu d'énergie est consommée par le circuit d'excitation.

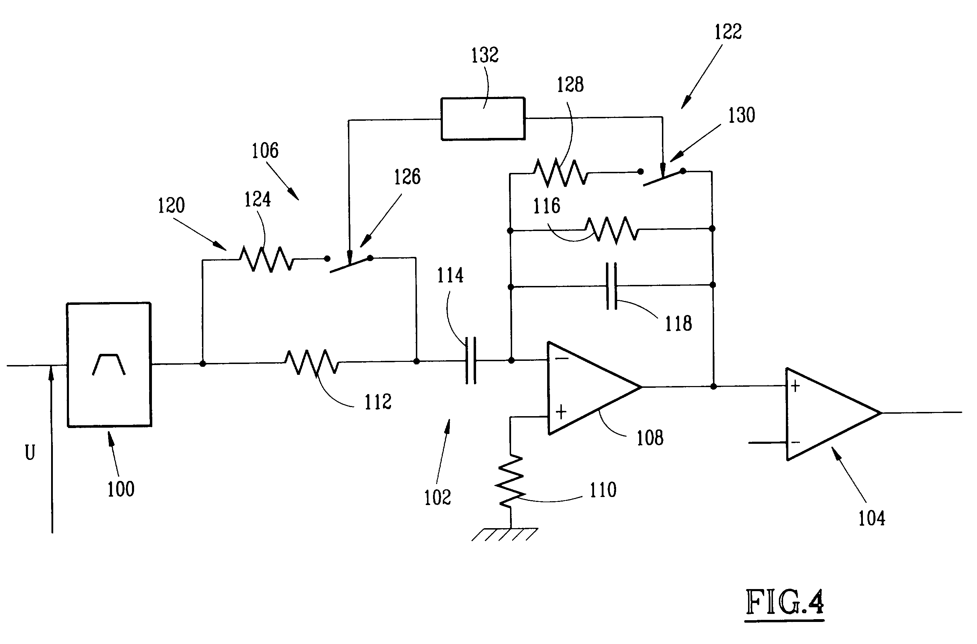

Sur la figure 4 est représenté en détail un mode de réalisation avantageux des moyens 20 de détection du phénomène de «pinch effect» en fin de court-circuit.

Ces moyens 20 sont adaptés pour recevoir en entrée la tension U mesurée entre l'électrode de soudage 12 et la masse 14. Ils comportent en entrée un filtre 100 adapté pour une mise en forme satisfaisante du signal. Les moyens 20 comportent, en sortie du filtre 100, un dérivateur de tension 102 suivi en sortie d'un comparateur 104. Ce dernier est adapté pour comparer l'estimation de la dérivée de la tension à un seuil prédéterminé et ainsi détecter le phénomène de «pinch effect», lorsque la valeur de la dérivée de la tension dépasse le seuil prédéterminé.

Dans cette forme de réalisation avantageuse, les moyens 20 comportent des moyens 106 de modification des paramètres de dérivation propres au circuit dérivateur 102, au cours de la période de court-circuit.

Ainsi, le circuit dérivateur 102 comporte un amplificateur opérationnel 108 dont la sortie non inverseuse est reliée à la masse par une résistance 110 de 10 kΩ. La borne inverseuse de l'amplificateur opérationnel 108 est reliée à la sortie du filtre 100 par une résistance 112 de 0,82 kΩ montée en série avec un condensateur 114 de 22 nF. La boucle de contre-réaction, reliant la sortie de l'amplificateur opérationnel 108 à sa borne inverseuse, comporte en parallèle une résistance 116 de 33 kΩ et un condensateur 118 de 4,7 nF.

Les résistances et condensateurs 110 à 118 définissent des premiers paramètres de dérivation de la tension filtrée reçue en entrée. En particulier, ces paramètres de dérivation définissent une bande passante -3dB allant de 160 Hz à 55 kHz.

Les moyens 106 de modification des paramètres de dérivation comportent des moyens 120 de modification du réseau d'entrée relié à la borne inverseuse de l'amplificateur opérationnel 108 et des moyens 122 de modification de l'impédance de la boucle de contre-réaction de l'amplificateur opérationnel 108.

Plus précisément,dans le mode de réalisation représenté, les moyens 120 comportent, montée en parallèle sur la résistance 112, une résistance auxiliaire 124 de 1 kΩ connectée en série avec un interrupteur commandé 126. De même, les moyens 122 comportent, montée en parallèle sur la résistance 116, une résistance 128 de 1 kΩ montée en série avec un interrupteur commandé 130.

Les interrupteurs 126 et 130 sont commandés par des moyens de pilotage 132 adaptés pour provoquer la fermeture des interrupteurs 126 et 130 lors de l'instant initial de détection du court-circuit. Les interrupteurs 126 et 130 sont maintenus fermés pendant une durée comprise entre 100 μs et 2 ms, et avantageusement sensiblement égale à 1 ms. Lorsque les interrupteurs 126 et 130 sont fermés, la bande passante à -3dB du circuit dérivateur 102 s'étend de 5,5 kHz à 100 kHz.

Ainsi, on comprend que les moyens de pilotage 132 assurent une modification des paramètres de dérivation du circuit de dérivation 102. Lors de la première phase du court-circuit, les seconds paramètres de dérivation, constituant des paramètres de dérivation modifiés, sont utilisés. Après achèvement de cette période initiale, avantageusement égale à 1 ms, les premiers paramètres de dérivation, constituant les paramètres de dérivation adaptés pour la comparaison au seuil prédéterminé, sont rétablis.

On comprend que la modification des paramètres de dérivation permettent au circuit déviateur de revenir plus rapidement à une valeur de repos après que ce circuit a été "excité" à une chute de tension qui correspond à la transition d'une période d'arc à une période de court-circuit.

En effet, il a été constaté que si les paramètres du circuit de dérivateur sont les mêmes durant toute la période du court-circuit, au début du phénomène de « pinch effect », en fonction des conditions opératoires qui influent sur la durée du court-circuit, la sortie du circuit dérivateur est revenue ou non à une valeur de repos. Si le court-circuit est long, la sortie du circuit dérivateur sera revenue à sa valeur de repos au début du «pinch effect» et la détection se fera correctement. Au contraire, avec des courts-circuits brefs, correspondant à un régime dynamique, la détection se fera de manière non satisfaisante.

**Revendications**

1. Poste de soudage à l'arc pouvant fonctionner avec alternance de périodes d'arc et de périodes de court-circuit, du type comportant un générateur de courant de soudage (10) adapté pour établir un courant de soudage entre une électrode de soudage (12) et une masse (14) destinée à être reliée à la pièce à souder, lequel poste de soudage comporte :

   - des moyens (20) de détection du phénomène de striction en fin de court-circuit entre l'électrode de soudage (12) et la masse (14) ; et
   - des moyens (22) de réduction du courant de soudage lors de l'existence du phénomène de striction,

   caractérisé en ce que les moyens (22) de réduction du courant de soudage comportent des moyens (24) d'établissement, en série avec l'arc de soudage, d'une tension en opposition avec le sens du courant de soudage, les moyens (24) comportant un circuit d'excitation (27 ; 52 ; 70) imposant ladite tension.

2. Poste de soudage selon la revendication 1, caractérisé en ce que les moyens (24) d'établissement d'une tension en opposition avec le courant de soudage comportent des moyens inductifs (26 ; 50) adaptés pour créer en série avec l'arc de soudage une force contre-électromotrice induite.

3. Poste de soudage selon la revendication 2, caractérisé en ce que lesdits moyens inductifs comportent un transformateur (26 ; 50), dont un enroulement de puissance (26A ; 50A) est connecté en série avec l'arc de soudage, et dont un enroulement de commande (26B ; 50B) est intégré dans le circuit d'excitation (27 ; 52 ; 70) piloté par les moyens (20) de détection du phénomène de «pinch effect».

4. Poste de soudage selon la revendication 3, caractérisé en ce que le circuit d'excitation (27 ; 52 ; 70) est adapté pour magnétiser l'enroulement de commande (26B ; 50B), pendant au moins une partie des périodes de fonctionnement en court-circuit du poste de soudage, afin de créer dans l'enroulement de puissance (26A ; 50A), ladite force contre-électromotrice induite.

5. Poste de soudage selon la revendication 4, caractérisé en ce que le circuit d'excitation (27 ; 52 ; 70) comporte une source de tension (28 ; 54 ; 80) et des moyens de commutation (38 ; 56 ; 72, 76) adaptés, pour assurer la magnétisation de l'enroulement de commande (26B) sous une première tension, lors de la détection du phénomène de striction afin de créer ladite force contre-électromotrice induite dans l'enroulement de puissance (26A).

6. Poste de soudage selon la revendication 5, caractérisé en ce que le circuit d'excitation (27) comporte une seconde source de tension (32) monté en série avec une diode (30), pour limiter la tension développée aux bornes de l'enroulement de commande (26B).

7. Poste de soudage selon la revendication 5, caractérisé en ce que ledit transformateur (50) comporte en outre un enroulement auxiliaire (50C) couplé magnétiquement avec l'enroulement de puissance (50A), et l'enroulement de commande (50B), lequel enroulement auxiliaire (50C) est monté en série avec une diode (62) dans le circuit d'excitation (52) pour limiter la tension aux bornes de l'enroulement de commande (50B).

8. Poste de soudage selon la revendication 5, caractérisé en ce que le circuit d'excitation (70) comporte, aux bornes de l'enroulement de commande (26B), deux branches opposées montées en parallèle comportant chacune un organe de commutation à semi-conducteur (72, 76) et une diode (74, 78) montés en série, ainsi qu'un générateur de tension (80) relié entre les transistors (72, 76) et diodes (74, 76) des deux branches.

9. Poste de soudage selon la revendication 5 ou 6, caractérisé en ce que le circuit d'excitation (27 ; 52 ; 70) comporte des moyens (34, 36 ; 58, 60 ; 72, 74) de mise en roue libre de l'enroulement de commande (26B ; 50B) avant l'achèvement de la période de fonctionnement en court-circuit du poste de soudage.

10. Poste de soudage selon l'une quelconque des revendications précédentes, caractérisé en ce que les moyens (20) de détection du phénomène de striction en fin de court-circuit comportent un circuit dérivateur (102) adapté pour estimer la dérivée de la tension établie entre l'électrode de soudage (12) et la masse (14) en fonction de paramètres de dérivation, et en ce que les moyens (20) comportent des moyens (106) de modification des paramètres de dérivation au cours de la période de court-circuit.

11. Poste de soudage selon la revendication 10, caractérisé en ce que les moyens de modification des paramètres de dérivation sont adaptés pour modifier les paramètres de dérivation depuis l'instant initial de détection du court-circuit et maintenir les paramètres modifiés pendant une durée comprise entre 100 μs et 2 ms et notamment sensiblement égale à 1 ms.

12. Poste de soudage selon l'une quelconque des revendications précédentes, caractérisé en ce que les moyens (20) de détection du phénomène de striction comportent, pour la mesure de la tension d'arc, un premier fil de sonde indépendant relié directement à l'électrode (14), en aval du faisceau (12A) alimentant l'électrode (14) depuis le générateur (10) et un second fil de sonde relié directement à la pièce à souder.

13. Utilisation d'un poste de soudage selon l'une des revendications 1 à 12 pour la mise en oeuvre d'un procédé de soudage MIG ou MAG.

FIG.1

FIG.2

FIG.3

FIG.4

**Office européen des brevets**

## RAPPORT DE RECHERCHE EUROPEENNE

Numéro de la demande

EP 00 40 1802

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X,D | FR 2 666 261 A (THE LINCOLN ELECTRIC COMPANY) 6 mars 1992 (1992-03-06) | 1,2,10 | B23K9/10 |
| A | * page 15, alinéa 2 - page 16, alinéa 1; revendication 1; figure 1 * | 12,13 | |
| A | DE 19 64 245 A (LINDE AG) 12 août 1971 (1971-08-12) * revendications 1,2; figure 1 * | 3 | |
| A | MECKE ET AL.: "Schnelle elektrische Speisequellen für Schweisslichtbögen" ELEKTRIE, vol. 48, no. 4, 1994, pages 143-150, XP000456369 berlin DE * page 145, colonne de gauche, alinéa 3 - page 146, colonne de gauche, alinéa 1; figure 4 * | 1-13 | |

| | | | DOMAINES TECHNIQUES RECHERCHES (Int.Cl.7) |
|---|---|---|---|
| | | | B23K |

Le présent rapport a été établi pour toutes les revendications

| Lieu de la recherche | Date d'achèvement de la recherche | Examinateur |
|---|---|---|
| LA HAYE | 11 octobre 2000 | Herbreteau, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 1802

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-10-2000

| Document brevet cité au rapport de recherche | | Date de publication | Membre(s) de la famille de brevet(s) | | Date de publication |
|---|---|---|---|---|---|
| FR 2666261 | A | 06-03-1992 | US | 5148001 A | 15-09-1992 |
| | | | DE | 4129247 A | 05-03-1992 |
| | | | SE | 512884 C | 29-05-2000 |
| | | | SE | 9102507 A | 05-03-1992 |
| DE 1964245 | A | 12-08-1971 | AT | 303896 B | 15-11-1972 |
| | | | BE | 760598 A | 27-05-1971 |
| | | | CH | 516369 A | 15-12-1971 |
| | | | JP | 54006490 B | 29-03-1979 |
| | | | NL | 7018650 A | 24-06-1971 |

EPO FORM P0460